# EUROPÄISCHE PATENTSCHRIFT

(11) **EP 4 230 440 B1**
(45) Veröffentlichungstag und Bekanntmachung des Hinweises auf die Patenterteilung: **23.10.2024**
(21) Anmeldenummer: 23150600.7
(22) Anmeldetag: 06.01.2023
(51) Int. Cl.: B60C 11/24

(54) **VERFAHREN UND VORRICHTUNG ZUR ERMITTLUNG EINER PROFILTIEFE EINES FAHRZEUGREIFENS**
METHOD AND DEVICE FOR DETERMINING A TREAD DEPTH OF A VEHICLE TYRE
PROCÉDÉ ET DISPOSITIF DE DÉTERMINATION DE LA PROFONDEUR DE SCULPTURE D'UN PNEU DE VÉHICULE

(30) Priorität: 17.02.2022 DE 102022201675
(43) Veröffentlichungstag der Anmeldung: 23.08.2023
(73) Patentinhaber: Continental Reifen Deutschland GmbH, 30175 Hannover (DE)
(72) Erfinder: Sahlmüller, Baldo, 30165 Hannover (DE); Kurz, Martin, 30165 Hannover (DE)
(74) Vertreter: Continental Corporation

(56) Entgegenhaltungen:
- EP-A1- 3 922 486
- DE-A1- 102012 023 197
- JP-A- 2003 166 818
- JP-A- 2011 168 211
- JP-A- 2013 136 297
- KR-A- 20190 062 057
- KR-B1- 102 247 479
- US-A1- 2015 090 023
- US-A1- 2016 121 671
- US-A1- 2016 280 014
- US-A1- 2017 246 916
- US-B1- 9 831 922

## Beschreibung

Die vorliegende Erfindung betrifft ein Verfahren sowie eine Vorrichtung zur Ermittlung einer Profiltiefe eines Fahrzeugreifens.

Der Stand der Technik wird beispielsweise gebildet durch die DE 10 2012 023 197 A1.

Die Überwachung der Profiltiefe eines Fahrzeugreifens ist aus Sicherheitsgründen bedeutsam. Profiltiefenmessungen können automatisiert beispielsweise mittels Sensoren im Reifen durchgeführt werden oder in Form von manuellen Messungen. Manuelle Messungen werden aus Zeitgründen oft nur an einem Punkt des Reifenprofils durchgeführt. Auch Reifensensoren bestimmen typischerweise nur einen lokalen Wert für die Profiltiefe. Allerdings ist es bekannt, dass Reifenprofile sich typischerweise ungleichmäßig abnutzen. Gründe hierfür sind asymmetrische Belastungen beim Fahren abhängig unter anderem von dem Reifentyp, der Radposition, dem Reifendruck, der Umgebungstemperatur, dem Fahrzeugtyp sowie dem individuellen Fahrverhalten eines Benutzers. Dies kann dazu führen, dass beispielsweise die Profiltiefe an den Rändern der Lauffläche geringer ist als diejenige in der Mitte. Wird bei einer automatisierten oder manuellen Messung eine Profiltiefe in der Mitte der Lauffläche gemessen, so wird die für Fragen der Sicherheit und gesetzliche Vorgaben entscheidende minimale Profiltiefe möglicherweise überschätzt.

Es ist daher eine Aufgabe der vorliegenden Erfindung, ein Verfahren sowie eine Vorrichtung zur Ermittlung einer Profiltiefe eines Fahrzeugreifens anzugeben, die eine zuverlässige Bestimmung einer minimalen Profiltiefe ermöglichen.

Diese Aufgabe wird gelöst mit dem Gegenstand der unabhängigen Patentansprüche. Vorteilhafte Ausführungsformen und Weiterbildungen sind Gegenstand der Unteransprüche.

Gemäß einem Aspekt der Erfindung wird ein Verfahren zur Ermittlung einer Profiltiefe eines Fahrzeugreifens angegeben, umfassend die Messung einer lokalen Profiltiefe in zumindest einem Messpunkt des Fahrzeugreifens als Indikator für eine minimale Profiltiefe des Fahrzeugreifens, ferner die Ermittlung eines Korrekturfaktors, der einen ungleichmäßigen Reifenabrieb berücksichtigt sowie das Bestimmen der minimalen Profiltiefe des Fahrzeugreifen durch eine Korrektur der gemessenen lokalen Profiltiefe auf einen ungleichmäßigen Reifenabrieb mittels des Korrekturfaktors.

Bei dem Verfahren wird zunächst zumindest eine Profiltiefe am Fahrzeugreifen gemessen, d.h. empirisch ermittelt. Diese Profiltiefe wird anschließend auf einen ungleichmäßigen Reifenabrieb korrigiert, um ein möglicherweise gefährliches Überschätzen der Profiltiefe zu vermeiden.

Das Verfahren hat somit den Vorteil, dass es auch bei einer lediglich in einem Punkt erfolgenden Profiltiefenmessung eine zuverlässige Aussage über eine minimale Profiltiefe des Fahrzeugreifens erlaubt. Auf zeitaufwendige oder technisch aufwendige Profiltiefenmessungen in verschiedenen Punkten kann somit verzichtet werden.

Gemäß einer Ausführungsform des Verfahrens beruht der Korrekturfaktor auf Erfahrungswerten bzw. Testergebnissen und/oder Simulationen in Bezug auf den Reifentyp und/oder die Radposition und/oder eine Laufleistung des Fahrzeugreifens und/oder den Reifendruck und/oder Informationen zur geografischen Position und/oder Umgebungstemperaturen und/oder ein Fahrverhalten und/oder einen Fahrzeugtyp.

Wie Modellierungen und empirische Untersuchungen zeigen, können die genannten Faktoren einen Einfluss auf den ungleichmäßigen Abrieb des Fahrzeugreifens haben. Für unterschiedliche Reifentypen existieren umfangreiche Erfahrungswerte, Testergebnisse und Modelle ebenso wie für unterschiedliche Radpositionen. Auch der Einfluss der Laufleistung des Fahrzeugreifens sowie des Reifendrucks auf den Reifenabrieb sind im Grundsatz bekannt. Als weitere Einflussfaktoren für einen ungleichmäßigen Reifenabrieb kommen insbesondere die geographische Position des Fahrzeugs, die beispielsweise Rückschlüsse auf Witterungsbedingungen und Straßenbeläge zulässt, sowie Umgebungstemperaturen, der Fahrzeugtyp sowie ein individuelles Fahrverhalten und damit gefahrene Geschwindigkeiten, Beschleunigungen sowie Kurvenfahrten in Betracht. Informationen über derartige Einflussfaktoren können vorteilhafterweise in einer Datenbank gespeichert sein und/oder einem Fahrassistenzsystem entnommen werden.

Alternativ oder zusätzlich kann der Korrekturfaktor auf einem gemessenen Abriebmuster des Fahrzeugreifens beruhen.

Gemäß dieser Ausführungsform wird das Abriebmuster für den konkreten Reifen empirisch ermittelt. Dies kann beispielsweise optisch erfolgen und/oder unter Zuhilfenahme eines automatisiert ermittelten ungleichmäßigen Reifenabriebs.

Grundsätzlich kann die gemessene Profiltiefe immer mit Hilfe des Korrekturfaktors für unregelmäßigen Abrieb korrigiert werden, ohne dass an einem Reifen durch eine Messung konkreter Abrieb nachgewiesen ist. Dies ist vorteilhaft, da sich Reifen an Fahrzeugen in der Regel - abhängig beispielsweise von der Achsposition, dem Fahrprofil oder der Fahrzeugart - immer sehr ähnlich verhalten bezüglich unregelmäßigen Abriebs. Vorteilhaft ist aber, wenn über eine einfache Messung festgestellt werden kann, ob ein Reifen ungleichmäßig abgerieben ist.

Beispielsweise kann ein ungleichmäßiger Reifenabrieb festgestellt werden mithilfe der Messung einer Radialbeschleunigung einer Lauffläche des Fahrzeugreifens sowie der Ermittlung einer Laufleistung des Fahrzeugreifens aus der gemessenen Radialbeschleunigung, der Ermittlung einer erwarteten Profiltiefe TDₑ aus der ermittelten Laufleistung mittels eines Reifenabriebmodells sowie der Ermittlung einer Profiltiefe TD_{e,ar} des Fahrzeugreifens aus der gemessenen Radialbeschleunigung.

Zur Ermittlung der Profiltiefe TD_{e,ar} wird eine zeitliche Veränderung der Radialbeschleunigung zumindest während eines vollständigen Durchgangs des Messpunktes durch die Reifenaufstandsfläche ermittelt. Ferner werden Extremwerte, insbesondere das Minimum und das Maximum, dieser zeitlichen Veränderung der Radialbeschleunigung als Maß TD_{e,ar} für die Profiltiefe ermittelt, wobei diese Profiltiefe über eine beispielsweise empirisch gefundene Funktion aus den Extremwerten berechnet wird.

Die derart ermittelte Profiltiefe TD_{e,ar} wird mit der erwarteten Profiltiefe TDₑ verglichen und es wird ein ungleichmäßiger Profilabrieb festgestellt, wenn die aus der gemessenen Radialbeschleunigung ermittelte Profiltiefe TD_{e,ar} von der erwarteten Profiltiefe TDₑ um mehr als einen festgelegten Wert abweicht.

Diese Vorgehensweise beruht auf der Erkenntnis, dass die Bestimmung der Profiltiefe über die gemessene Radialbeschleunigung versagen kann, wenn der Profilabrieb ungleichmäßig erfolgt. Dies kann man jedoch nutzen, indem man eine aufgrund einer bekannten Laufleistung des Reifens erwartete Profiltiefe, mit der aus der gemessenen Radialbeschleunigung bestimmten Profiltiefe vergleicht. Abweichungen deuten dann auf einen ungleichmäßigen Profilabrieb hin.

Gemäß einer Ausführungsform werden die gemessene lokale Profiltiefe und/oder die bestimmte minimale Profiltiefe in einer Datenbank gespeichert. Insbesondere werden diese Daten zusammen mit der genauen Position des Messpunktes - beispielsweise durch Angabe der Rille, in der der Messpunkt liegt - und gegebenenfalls mit weiteren Informationen über den Reifen hinterlegt. Auf die Datenbank kann zugegriffen werden, um eine zeitliche Entwicklung des Fahrzeugreifens beobachten. Ferner können die Daten in der Datenbank genutzt werden, um die Ermittlung des Korrekturfaktors durch einen selbstlernenden Algorithmus zu verbessern. Ferner können in der Datenbank typische Abriebmuster hinterlegt sein, die mittels Testung von Fahrzeugreifen oder aus Reifenmanagementsystemen gewonnen wurden.

Gemäß einer Ausführungsform wird eine Warnung ausgegeben, wenn die bestimmte minimale Profiltiefe einen vorgegebenen Grenzwert unterschreitet. Unter einer Warnung werden auch Handlungsanweisungen verstanden, die für die Sicherheit des Fahrzeugs relevant sind.

Die Messung der lokalen Profiltiefe kann automatisiert erfolgen, beispielsweise beim Überfahren einer optischen Kontrollstelle oder mit einem Reifensensor. Alternativ kann die Messung auch manuell erfolgen.

Gemäß einem Aspekt der Erfindung wird eine Vorrichtung zur Ermittlung einer Profiltiefe eines Fahrzeugreifens angegeben, die zumindest eine Einrichtung zur Messung einer lokalen Profiltiefe in zumindest einem Messpunkt des Fahrzeugreifens umfasst, sowie eine Datenbank enthaltend Informationen zu Korrekturfaktoren, die einen ungleichmäßigen Reifenabrieb berücksichtigen. Ferner umfasst die Vorrichtung zumindest eine Recheneinheit mit einem Speicher, in dem Programmcode abgelegt ist, der die Recheneinheit veranlasst, das beschriebene Verfahren zur Ermittlung der Profiltiefe des Fahrzeugreifens durchzuführen und die minimale Profiltiefe des Fahrzeugreifens mittels einer Korrektur der gemessenen lokalen Profiltiefe auf einen ungleichmäßigen Reifenabrieb mittels des Korrekturfaktors zu bestimmen.

Die Vorrichtung weist die im Zusammenhang mit dem Verfahren beschriebenen Vorteile auf.

Beispielhafte Ausführungsformen werden im Folgenden anhand schematischer Figuren näher beschrieben. Darin zeigen:
- Figur 1: einen Querschnitt durch einen Fahrzeugreifen;
- Figur 2: ein Diagramm zur Veranschaulichung einer Profiltiefenmessung mittels eines Verfahrens gemäß einer Ausführungsform der Erfindung;
- Figur 3: einen Graphen zur Veranschaulichung eines für die Durchführung eines Verfahrens gemäß einer Ausführungsform der Erfindung verwendeten Modells und
- Figur 4: einen weiteren Graphen zur Veranschaulichung eines für die Durchführung eines Verfahrens gemäß einer Ausführungsform der Erfindung verwendeten Modells.

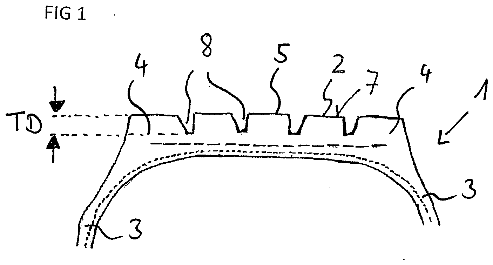

Figur 1 zeigt einen Querschnitt durch einen Fahrzeugreifen 1. Der Fahrzeugreifen 1 ist als gängiger Luftreifen ausgebildet mit Seitenwänden 3 und einer Lauffläche 2 mit einem zentralen Bereich 5 und Schultern 4. Die Oberseite 7 der Lauffläche 5 weist ein Profil auf, das eine Anzahl von Rillen 8 aufweist, von denen in Figur 1 lediglich vier schematisch gezeigt sind. Die Rillen 8 weisen eine Tiefe TD auf, die auch als Profiltiefe des Fahrzeugreifens 1 bezeichnet wird.

Mit zunehmender Laufleistung des Fahrzeugreifens 1 und somit zunehmender Materialabnutzung verringert sich die Profiltiefe TD. Unterschreitet sie einen vorgegebenen Minimalwert, so ist die Betriebssicherheit des Fahrzeugreifens 1 nicht mehr gegeben. Die Profiltiefe TD wird daher in regelmäßigen oder unregelmäßigen Abständen überprüft. Da sich der Fahrzeugreifen 1 im Betrieb ungleichmäßig abnutzen kann, beispielsweise im Bereich der Schultern 4 schneller als im zentralen Bereich 5 der Lauffläche 2, kann nicht davon ausgegangen werden, dass die Tiefe TD über die gesamte Lauffläche 2 dieselbe ist, selbst wenn sie es beim neuen Reifen war.

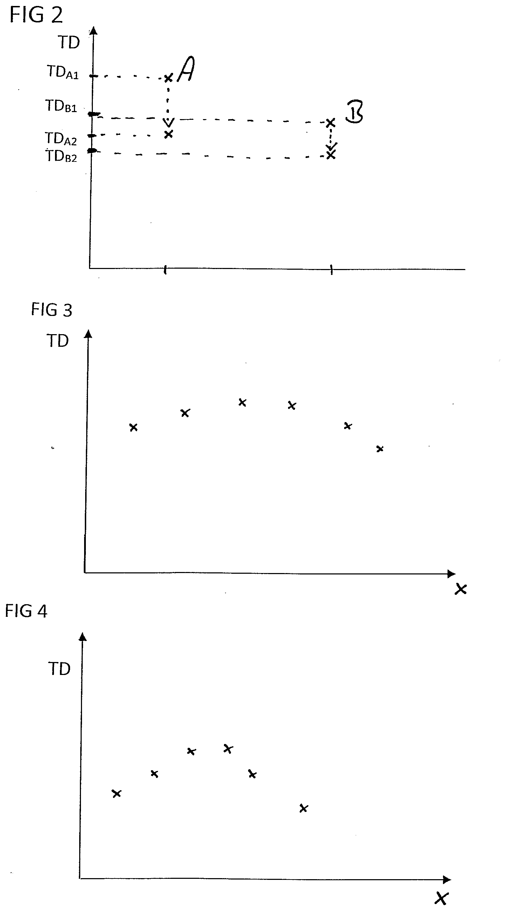

Um Profiltiefenmessungen schnell und einfach durchführen zu können, gleichzeitig jedoch einem unregelmäßigen Reifenabrieb Rechnung tragen zu können, wird wie im Folgenden anhand der Figuren 2 bis 4 beschrieben vorgegangen:

Figur 2 zeigt die Ergebnisse zweier unterschiedlicher Profiltiefenmessungen A und B. Am Messpunkt A, beispielsweise in der zweiten Rille 8 von links in Figur 1, wurde eine Profiltiefe TD_{A1} gemessen. Die Profiltiefe TD_{A1} wird als Indikator für eine minimale Profiltiefe des Fahrzeugreifens verwendet. Da jedoch eine ungleichmäßige Abnutzung des Fahrzeugreifens vorliegen kann, wird die gemessene lokale Profiltiefe TD_{A1} im Punkt A mit einem Korrekturfaktor korrigiert, der einen ungleichmäßigen Reifenabrieb berücksichtigt.

Dazu zeigt Figur 3 einen Graphen, der ein Modell des unregelmäßigen Reifenabriebs illustriert. Aufgetragen ist die Profiltiefe TD über der Position x einer Profilrille von einer Seite des Fahrzeugreifens zur anderen, wobei in dieser Figur statt vier Rillen sechs dargestellt sind. Figur 4 zeigt dasselbe für einen anderen Fahrzeugreifen. Wie in den Figuren 3 und 4 erkennbar ist, weisen die sechs Rillen nicht dieselbe Profiltiefe TD auf. Vielmehr sind insbesondere die Rillen im Bereich der Schultern weniger tief, da diese Bereiche des Fahrzeugreifens stärker abgefahren wurden.

Wurde nun im Messpunkt A, das heißt in der zweiten Rille 8 von links die Profiltiefe TD_{A1} gemessen, so ist diese, wenn das in Figur 3 dargestellte Modell zugrunde gelegt wird, nicht die minimale Profiltiefe des betreffenden Fahrzeugreifens. Um diese zu erhalten, wird die gemessene Profiltiefe TD_{A1} mit einem sich aus dem Modell gemäß Figur 3 ergebenden Korrekturfaktor korrigiert, der den ungleichmäßigen Reifenabrieb berücksichtigt. Das Ergebnis ist die verringerte Profiltiefe TD_{A2}. Diese kann beispielsweise der Profiltiefe einer der äußeren Rillen entsprechen und stellt die minimale Profiltiefe des Fahrzeugreifens dar.

Figur 2 zeigt dasselbe Vorgehen für den Messpunkt B, der beispielsweise aus einer Messung an einem anderen Fahrzeugreifen stammen kann. Die dort gemessene Profiltiefe TD_{B1} wird wie beschrieben unter Zuhilfenahme des in Figur 4 dargestellten Modells korrigiert auf die geringere Profiltiefe TD_{B2}.

Die den in den Figuren 3 und 4 gezeigten Graphen zugrunde liegenden Modelle können insbesondere auf Erfahrungswerten bzw. Messwerten aus Reifentests oder Reifenmanagementsystemen stammen. Ebenso können die Modelle auf Simulationen des Reifenabriebs basieren. Die Modelle berücksichtigen dabei die Abhängigkeit des Abriebprofils beispielsweise von der Radposition, dem Reifen und dem Fahrzeugtyp, der Laufleistung des Fahrzeugreifens, dem Reifendruck, Umgebungstemperaturen, dem individuellen Fahrverhalten oder gegebenenfalls anderen oder weiteren Faktoren.

### Bezugszeichenliste

- 1: Fahrzeugreifen
- 2: Lauffläche
- 3: Seitenwand
- 4: Schulter
- 5: zentraler Bereich
- 7: Oberfläche
- 8: Rille

## Patentansprüche

1. Verfahren zur Ermittlung einer Profiltiefe eines Fahrzeugreifens (1), umfassend
- Messung einer lokalen Profiltiefe in zumindest einem Messpunkt des Fahrzeugreifens (1) als Indikator für eine minimale Profiltiefe des Fahrzeugreifens (1); **Gekennzeichnet durch die Schritte:**
- Ermittlung eines Korrekturfaktors, der einen ungleichmäßigen Reifenabrieb (1) berücksichtigt,
- Bestimmen der minimalen Profiltiefe des Fahrzeugreifens (1) durch eine Korrektur der gemessenen lokalen Profiltiefe auf einen ungleichmäßigen Reifenabrieb mittels des Korrekturfaktors.

2. Verfahren nach Anspruch 1,
wobei der Korrekturfaktor auf Erfahrungswerten in Bezug auf den Reifentyp und/oder die Radposition und/oder eine Laufleistung des Fahrzeugreifens (1) und/oder den Reifendruck und/oder Informationen zur geografischen Position und/oder Umgebungstemperaturen und/oder ein Fahrverhalten und/oder einen Fahrzeugtyp beruht.

3. Verfahren nach Anspruch 1 oder 2,
wobei der Korrekturfaktor auf einem gemessenen Abriebmuster des Fahrzeugreifens (1) beruht.

4. Verfahren nach Anspruch 1 oder 2,
wobei der Korrekturfaktor auf einem simulierten Abriebmuster des Fahrzeugreifens (1) beruht.

5. Verfahren nach einem der Ansprüche 1 bis 4,
wobei die gemessene lokale Profiltiefe und/oder die bestimmte minimale Profiltiefe in einer Datenbank gespeichert werden.

6. Verfahren nach einem der Ansprüche 1 bis 5,
eine Warnung ausgegeben wird, wenn die bestimmte minimale Profiltiefe einen vorgegebenen Grenzwert unterschreitet.

7. Verfahren nach einem der Ansprüche 1 bis 6,
wobei die Messung der lokalen Profiltiefe automatisiert erfolgt.

8. Verfahren nach einem der Ansprüche 1 bis 6,
wobei die Messung der lokalen Profiltiefe manuell erfolgt.

9. Verfahren nach einem der Ansprüche 1 bis 8,
wobei mit einem Reifensensor automatisiert bestimmt wird, ob unregelmäßiger Abrieb vorliegt.

10. Vorrichtung zur Ermittlung einer Profiltiefe eines Fahrzeugreifens (1), umfassend:
- zumindest eine Einrichtung zur Messung einer lokalen Profiltiefe in zumindest einem Messpunkt des Fahrzeugreifens (1);
**Gekennzeichnet durch:**
- eine Datenbank enthaltend Informationen zu Korrekturfaktoren, die einen ungleichmäßigen Reifenabrieb berücksichtigen;
- zumindest eine Recheneinheit mit einem Speicher, in dem Programmcode abgelegt ist, der die Recheneinheit veranlasst, ein Verfahren gemäß einem der Ansprüche 1 bis 7 durchzuführen und die minimale Profiltiefe des Fahrzeugreifens (1) mittels einer Korrektur der gemessenen lokalen Profiltiefe auf einen ungleichmäßigen Reifenabrieb mittels des Korrekturfaktors zu bestimmen.

## Claims

1. Method for determining a tread depth of a vehicle tyre (1), comprising
- measuring a local tread depth at at least one measuring point of the vehicle tyre (1) as an indicator of a minimum tread depth of the vehicle tyre (1); **characterized by** the steps of:
- determining a correction factor which takes into account uneven tyre wear (1);
- determining the minimum tread depth of the vehicle tyre (1) by a correction of the measured local tread depth to allow for uneven tyre wear by means of the correction factor.

2. Method according to Claim 1,
wherein the correction factor is based on empirical values with respect to the tyre type and/or the wheel position and/or a mileage of the vehicle tyre (1) and/or the tyre pressure and/or information on the geographical position and/or ambient temperatures and/or vehicle handling and/or a vehicle type.

3. Method according to Claim 1 or 2,
wherein the correction factor is based on a measured wear pattern of the vehicle tyre (1).

4. Method according to Claim 1 or 2,
wherein the correction factor is based on a simulated wear pattern of the vehicle tyre (1).

5. Method according to one of Claims 1 to 4,
wherein the measured local tread depth and/or the determined minimum tread depth are stored in a database.

6. Method according to one of Claims 1 to 5,
wherein a warning is issued if the determined minimum tread depth is below a predetermined limit value.

7. Method according to one of Claims 1 to 6,
wherein the measurement of the local tread depth takes place in an automated manner.

8. Method according to one of Claims 1 to 6,
wherein the measurement of the local tread depth takes place manually.

9. Method according to one of Claims 1 to 8,
wherein a tyre sensor is used to determine in an automated manner whether there is uneven wear.

10. Device for determining a tread depth of a vehicle tyre (1), comprising:
- at least one means for measuring a local tread depth at at least one measuring point of the vehicle tyre (1);
**characterized by**:
- a database containing information on correction factors which take into account uneven tyre wear;
- at least one computing unit with a memory, stored in which is program code which causes the computing unit to carry out a method according to one of Claims 1 to 7 and to determine the minimum tread depth of the vehicle tyre (1) by means of a correction of the measured local tread depth to allow for uneven tyre wear by means of the correction factor.

## Revendications

1. Procédé de détermination d'une profondeur de sculpture d'un pneu de véhicule (1), comprenant :
- la mesure d'une profondeur de sculpture locale en au moins un point de mesure du pneu de véhicule (1) en tant qu'indicateur d'une profondeur de sculpture minimale du pneu de véhicule (1) ;
**caractérisé par** les étapes suivantes :
- la détermination d'un facteur de correction tenant compte d'une usure inégale du pneu (1),
- la détermination de la profondeur de sculpture minimale du pneu de véhicule (1) par une correction de la profondeur de sculpture locale mesurée en cas d'usure inégale du pneu au moyen du facteur de correction.

2. Procédé selon la revendication 1,
dans lequel le facteur de correction est basé sur des valeurs empiriques concernant le type de pneu et/ou la position de la roue et/ou un kilométrage du pneu de véhicule (1) et/ou la pression du pneu et/ou des informations concernant la position géographique et/ou les températures ambiantes et/ou un comportement de conduite et/ou un type de véhicule.

3. Procédé selon la revendication 1 ou 2,
dans lequel le facteur de correction est basé sur un motif d'usure mesuré du pneu de véhicule (1).

4. Procédé selon la revendication 1 ou 2,
dans lequel le facteur de correction est basé sur un motif d'usure simulé du pneu de véhicule (1).

5. Procédé selon l'une quelconque des revendications 1 à 4,
dans lequel la profondeur de sculpture locale mesurée et/ou la profondeur de sculpture minimale déterminée sont stockées dans une base de données.

6. Procédé selon l'une quelconque des revendications 1 à 5,
dans lequel une alerte est émise si la profondeur de sculpture minimale déterminée est inférieure à une valeur limite prédéterminée.

7. Procédé selon l'une quelconque des revendications 1 à 6,
dans lequel la mesure de la profondeur de sculpture locale est effectuée de manière automatisée.

8. Procédé selon l'une quelconque des revendications 1 à 6,
dans lequel la mesure de la profondeur de sculpture locale est effectuée manuellement.

9. Procédé selon l'une quelconque des revendications 1 à 8,
dans lequel il est déterminé de manière automatisée au moyen d'un capteur de pneu si une usure irrégulière est présente.

10. Dispositif de détermination d'une profondeur de sculpture d'un pneu de véhicule (1), comprenant :
- au moins un moyen de mesure d'une profondeur de sculpture locale en au moins un point de mesure du pneu de véhicule (1) ;
**caractérisé par** :
- une base de données contenant des informations relatives à des facteurs de correction tenant compte d'une usure inégale du pneu ;
- au moins une unité de calcul dotée d'une mémoire dans laquelle est stocké un code de programme qui amène l'unité de calcul à mettre en oeuvre un procédé selon l'une quelconque des revendications 1 à 7 et à déterminer la profondeur de sculpture minimale du pneu de véhicule (1) au moyen d'une correction de la profondeur de sculpture locale mesurée en cas d'usure inégale du pneu au moyen du facteur de correction.
